Europäisches Patentamt

**European Patent Office**

Office européen des brevets

(11) Numéro de publication : **0 033 967**
**B1**

(12) # FASCICULE DE BREVET EUROPÉEN

(45) Date de publication du fascicule du brevet :
**25.07.84**

(21) Numéro de dépôt : **81100894.5**

(22) Date de dépôt : **09.02.81**

(51) Int. Cl.³ : **B 60 T   1/00**, B 60 T   7/12

(54) **Dispositif de blocage en position d'arrêt pour véhicule automobile.**

(30) Priorité : **12.02.80 FR 8003077**

(43) Date de publication de la demande :
**19.08.81 Bulletin 81/33**

(45) Mention de la délivrance du brevet :
**25.07.84 Bulletin 84/30**

(84) Etats contractants désignés :
**BE DE GB IT NL SE**

(56) Documents cités :
**DE-A- 2 418 280**
**FR-A- 2 055 538**
**FR-A- 2 349 076**
**US-A- 1 977 588**
**US-A- 2 670 064**
**US-A- 3 601 230**
**US-A- 3 856 119**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Richard, Jackie**
**7, rue Dimitrof**
**F-95870 Bezons (FR)**

(74) Mandataire : **Casalonga, Axel et al**
**BUREAU D.A. CASALONGA OFFICE JOSSE & PETIT**
**Baaderstrasse 12-14**
**D-8000 München 5 (DE)**

Jouve, 18, rue St-Denis, 75001 Paris, France

## Description

La présente invention a pour objet un dispositif de blocage permettant de maintenir en position d'arrêt un organe mécanique rotatif faisant partie d'un groupe motopropulseur et relié aux roues motrices d'un véhicule automobile.

Un tel organe mécanique rotatif, constitué habituellement par une roue dite « roue de parking » comportant une pluralité de créneaux périphériques, est rendu nécessaire dans les véhicules automobiles possédant une transmission dite automatique c'est-à-dire munie d'un convertisseur hydraulique. Dans les véhicules de ce type en effet, il convient d'assurer avec une sécurité parfaite le blocage du véhicule en position d'arrêt. Ce blocage ne peut pas être effectué comme dans un véhicule comportant une transmission à embrayage de type classique en engageant l'un des rapports de la boîte de vitesses. On prévoit donc d'effectuer le blocage du véhicule en position d'arrêt au moyen de cet organe mécanique rotatif dont les créneaux périphériques coopèrent avec un doigt de blocage qui peut être placé en position de coopération avec les créneaux par une action manuelle du conducteur.

Pour déverrouiller un tel système on prévoit généralement de mettre à profit le couple de rotation engendré par le poids du véhicule et s'exerçant par l'intermédiaire des roues motrices sur l'organe mécanique rotatif que constitue la roue de parking (voir par exemple le brevet US 1 977 588). Ce couple tend alors à faire tourner cet organe mécanique dans un sens ou dans l'autre suivant la pente de l'emplacement où se trouve immobilisé le véhicule. Il convient donc de conformer la partie active du doigt de blocage et les différents créneaux périphériques de l'organe mécanique rotatif de façon que ce couple exercé par l'organe mécanique rotatif entraîne un mouvement de dégagement automatique du doigt de blocage. Ce n'est que dans le cas où le véhicule se trouve immobilisé sur un emplacement parfaitement plan que le doigt de blocage doit être dégagé par des moyens particuliers comportant par exemple un ressort de rappel.

La présente invention a pour objet un dispositif de blocage de ce type dans lequel le doigt de blocage est dégagé de façon automatique comme il vient d'être dit et dans lequel la structure des créneaux périphériques de l'organe mécanique rotatif et de la partie active du doigt de blocage est telle que l'on puisse obtenir une configuration extrêmement compacte du dispositif tout en maintenant un équilibre entre les couples de basculement du doigt de blocage respectivement pour chacun des sens de rotation de l'organe mécanique constitué par la roue de parking.

Le dispositif de blocage en position d'arrêt selon la présente invention comprend un organe mécanique rotatif relié aux roues motrices d'un véhicule automobile. L'organe mécanique comporte une pluralité de créneaux périphériques coopérant avec un doigt de blocage pivotant à dégagement automatique. L'action du couple de rotation engendré par le poids du véhicule s'exerce en effet par l'intermédiaire des roues motrices sur l'organe mécanique rotatif et provoque le dégagement du doigt de blocage.

Selon l'invention les surfaces de contact du doigt de blocage et d'un des créneaux, respectivement pour l'un ou l'autre des sens de rotation de l'organe mécanique, sont inclinées de façon dissymétrique par rapport à une direction radiale de l'organe mécanique, rotatif, l'inclinaison desdites surfaces de contact du doigt de blocage étant telle que les couples de basculement exercés par la rotation de l'organe mécanique et transmis par les créneaux au doigt de blocage soient sensiblement identiques pour les deux sens de rotation de l'organe mécanique.

Les inclinaisons des surfaces de contact en regard sont telles que les bras de levier des efforts exercés par la rotation de l'organe mécanique dans l'un et l'autre sens soient sensiblement dans le même rapport que les bras de levier des réactions exercées sur le doigt de blocage par rapport au centre de rotation de ce dernier.

Par ailleurs, il convient que les inclinaisons des surfaces de contact soient telles que les bras de levier des efforts exercés par la rotation de l'organe mécanique ne soient pas inexistants. Malgré cette limitation, la dissymétrie des surfaces de contact précitées permet d'utiliser un doigt de blocage de dimensions nettement plus faibles que celles des doigts de blocage utilisés jusqu'à présent pour lesquels les surfaces de contact étaient symétriques.

Pour améliorer le dégagement du doigt de blocage lors de la rotation de l'organe mécanique, les surfaces de contact respectives des créneaux et/ou du doigt de blocage sont de préférence arrondies et affectent la forme de développantes de cercle. Pour simplifier la réalisation du dispositif on peut se contenter de réaliser un profil en développante de cercle uniquement sur certaines de ces surfaces et par exemple sur celles des créneaux périphériques de l'organe mécanique rotatif.

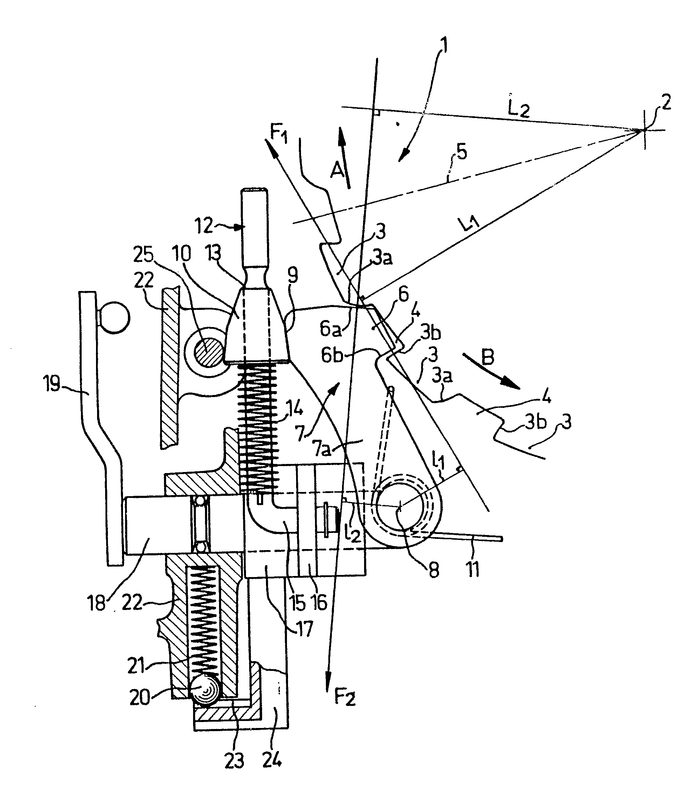

La présente invention sera mieux comprise à l'étude d'un mode de réalisation particulier décrit à titre d'exemple nullement limitatif et illustré par le dessin annexé, sur lequel :

la figure unique est une vue schématique en coupe partielle du doigt de blocage d'un dispositif conforme à l'invention montrant également les moyens d'actionnement de ce doigt de blocage et une partie de l'organe mécanique rotatif constitué par une roue de parking.

Tel qu'il est représenté sur la figure unique, le dispositif comprend un organe mécanique ou roue de parking référencé dans son ensemble 1 pouvant subir une rotation autour de son axe 2 et comportant sur sa périphérie des créneaux constitués par la succession de dents en relief 3 et de creux 4 délimités par des surfaces de contact 3a et 3b. Les deux surfaces de contact présentent dans l'exemple illustré un profil en développante de cercle et sont inclinées de manière dissymétrique par rapport à une direction radiale matérialisée par exemple sur la figure par le rayon 5 en trait mixte.

Les créneaux de la roue 1 coopèrent avec le bec 6 d'un doigt de blocage 7 pouvant pivoter autour d'un axe 8. Le doigt de blocage 7 présente un corps 7a à l'extrémité duquel se trouve disposé le bec 6, en direction de la roue 1. Le bec 6 est délimité par les surfaces inclinées 6a et 6b destinées à entrer en contact respectivement avec les surfaces 3a et 3b délimitant un creux 4 de la roue 1. On notera que dans l'exemple de réalisation illustré, les surfaces inclinées 6a et 6b sont sensiblement planes. Par ailleurs, le bec 6 du doigt de blocage 7 est de dimensions telles qu'un certain jeu de fonctionnement subsiste lorsque le bec 6 pénètre dans un creux 4.

A l'opposé du bec 6, l'extrémité du corps longitudinal 7a du doigt de blocage 7 présente une surface d'appui 9 qui peut venir en contact avec une came coulissante 10 présentant sensiblement une forme tronconique.

Un ressort 11 dont l'une des extrémités est fixe, est enroulé autour de l'axe 8 du doigt de blocage 7 et vient prendre appui par son autre extrémité sur la face du corps longitudinal 7a qui se trouve en regard de la roue 1 de façon à exercer sur le doigt de blocage 7 une action tendant à le faire tourner autour de son axe 8 dans le sens qui dégage le bec 6 d'un creux 4.

Les moyens d'actionnement du doigt de blocage 7 permettant en particulier de placer ce dernier en position de blocage tel qu'illustré sur la figure comprennent une tige 12 présentant une portion rectiligne sur laquelle est montée de manière coulissante la came 10 qui peut venir en butée sur un épaulement 13 sous l'action du ressort 14. La tige 12 se complète par une portion coudée 15 dont l'extrémité traverse une plaque radiale 16 solidaire d'un secteur de commande 17 lequel peut pivoter autour d'un axe 18. Compte tenu de ce montage, l'extrémité recourbée 15 de la tige 12 subit donc une rotation en même temps que le secteur de commande 17 autour de l'axe 18 ce qui entraîne un déplacement sensiblement en translation de la tige 12. La rotation de l'axe 18 et du secteur de commande 17 peut être effectuée manuellement par le levier 19. Le secteur de commande 17 peut être bloqué en différentes positions appropriées au moyen d'une bille 20 soumise à l'action d'un ressort de poussée 21 logé dans le carter 22. La bille 20 coopère avec une ou plusieurs cannelures 23 pratiquées sur un bras 24 solidaire du secteur de commande 17.

Par ailleurs, la came 10 coopère avec un élément de réaction 25 en forme de diabolo monté dans le carter 22, l'élément 25 se trouvant sensiblement à l'opposé de la surface 9 du doigt de blocage 7 par rapport à la came 10.

Sur la figure, le dispositif se trouve dans la position où le véhicule est arrêté, les roues motrices étant bloquées par l'intermédiaire de l'organe mécanique ou roue de parking 1 coopérant avec le doigt de blocage 7. Pour déverrouiller le dispositif, le conducteur actionne le levier 19 ce qui provoque une rotation de l'axe 18 et du secteur de commande 17. Ce dernier est alors arrêté dans une autre position par la bille 20 coopérant avec une autre cannelure du bras 24. La tige 12, sous l'action de la rotation du secteur de commande 17 et de son extrémité coudée 15, subit un déplacement vers le bas par rapport à la figure. La came 10 est entraînée dans ce mouvement par l'épaulement 13 de la tige 12. La came 10 se trouve donc dégagée de la surface 9 du doigt de blocage 7 et du diabolo de réaction 25. Le doigt de blocage 7 n'étant plus retenu par la came 10 peut basculer autour de son axe 8 de façon à libérer la roue 1.

Le véhicule, s'il se trouve stationné dans un emplacement légèrement en pente, soumet les roues motrices, par l'effet de son propre poids, à un couple de rotation qui est transmis à la roue de parking constituant l'organe mécanique 1. Le couple qui s'exerce sur cet organe tend donc à le faire tourner soit dans un sens, soit dans l'autre suivant l'orientation de la pente de l'emplacement où se trouve stationné le véhicule. Si le sens de rotation de l'organe mécanique 1 est celui qui est matérialisé sur la figure par la flèche A c'est la surface 3b du creux 4 qui entre en contact avec la surface 6b du bec 6 du doigt de blocage 7. Le couple de rotation de l'organe 1 provoque sur ses surfaces en contact un effort tangentiel repéré $F_1$ sur la figure. L'orientation de cet effort tangentiel dépend bien entendu de l'inclinaison des surfaces en contact 3b et 6b. Le couple de rotation est $C_1 = F_1 \times L_1$ où $L_1$ est le bras de levier de l'effort tangentiel $F_1$ c'est-à-dire la perpendiculaire abaissée du centre de rotation 2 de la roue 1 sur la direction de l'effort tangentiel $F_1$.

Si au contraire le véhicule se trouve sur un emplacement dont la pente entraîne une rotation de la roue 1 dans le sens matérialisé par la flèche B sur la figure, les surfaces en contact sont les surfaces respectives 3a et 6a du creux 4 et du bec 6. L'effort tangentiel qui résulte du couple de rotation de la roue 1 s'exerce cette fois dans la direction matérialisée par la flèche $F_2$ sur la figure, son inclinaison dépendant à nouveau de celle des surfaces en contact 3a et 6a. Le couple de rotation est $C_2 = F_2 \times L_2$ où $L_2$ est le bras de levier de l'effort $F_2$ par rapport au centre de rotation 2.

Les couples de rotation $C_1$ et $C_2$ sont pratiquement identiques étant donné qu'ils ne dépendent en fait que du poids du véhicule et de la pente de l'emplacement où il se trouve stationné, laquelle ne varie que dans de faibles proportions.

Dans la pratique il est souhaitable que les couples de basculement qui s'exercent sur le doigt de blocage 7 soient sensiblement égaux quel que soit le sens de rotation de l'organe 1. Sur la figure, on a noté les bras de leviers $l_1$ et $l_2$ pour les efforts tangentiels $F_1$ et $F_2$ qui définissent la valeur de ces couples de basculement. Pour que les couples de basculement du doigt de blocage 7 soient égaux il est donc nécessaire que l'on ait :

$$F_1 \times l_1 = F_2 \times l_2.$$

Une telle égalité peut être obtenue aisément en maintenant sensiblement dans le même rapport les bras de levier $L_1$ et $L_2$ des efforts $F_1$ et $F_2$ exercés par la rotation de l'organe mécanique 1 dans l'un et l'autre sens et les bras de levier $l_1$ et $l_2$ des efforts de réaction correspondants par rapport au centre de rotation 8 du doigt de blocage. Il suffit autrement dit que l'on ait :

$$L_1/l_1 = L_2/l_2.$$

Le choix d'inclinaisons différentes et assymétriques pour les surfaces 3a et 3b des creux 4 permet d'orienter dans des directions déterminées les efforts tangentiels $F_1$ et $F_2$ dont les valeurs sont différentes et qui possèdent des bras de levier $L_1$ et $L_2$ également différents. La position géométrique de l'axe 8 du doigt de blocage 7 étant déterminée par des considérations constructives tenant à la structure du carter 22, l'utilisation de telles surfaces dissymétriques permet de diminuer considérablement les dimensions du corps longitudinal 7a du doigt de blocage 7 autorisant ainsi la réalisation d'un dispositif de faible encombrement.

Par contraste en effet, dans un dispositif de type classique où l'on cherche à maintenir une égalité des efforts tangentiels $F_1$ et $F_2$ dans les deux sens, il est nécessaire de prévoir un doigt de blocage de grandes dimensions, les surfaces de contact des créneaux de la roue de parking étant alors symétriques par rapport à une direction radiale.

Une limite à la diminution des dimensions du doigt de blocage 7 réside simplement dans l'épaisseur du bec 6 du doigt de blocage 7 qui doit garder une résistance suffisante pour un fonctionnement convenable. Par ailleurs, il est également nécessaire que l'inclinaison des surfaces de contact ne soit pas telle que l'un des bras de levier tel que $L_1$ ou $L_2$ devienne totalement inexistant l'effort tangentiel correspondant passant alors par le centre de rotation 2. Il s'agit là toutefois des seules limites au choix de l'inclinaison des surfaces en contact qui permet ainsi de diminuer considérablement l'encombrement du dipositif de blocage.

On notera que lorsque le véhicule se trouve arrêté sur une surface totalement plane, aucun couple de rotation ne s'exerce sur la roue 1. Dans ce cas, le doigt de blocage 7 se trouve dégagé par l'action du ressort 11. Dans tous les autres cas le dégagement se fait comme il vient d'être dit automatiquement par l'action de rotation de la roue 1, les surfaces respectives en contact des créneaux périphériques et du doigt de blocage se comportant à la manière d'un engrenage. La rotation de la roue 1 autour de son axe 2 entraîne donc la rotation du doigt de blocage 7 autour de son axe 8.

Pour placer le doigt de blocage 7 en position de blocage, le conducteur agit manuellement sur le levier 19 remettant ainsi la tige 12 dans la position illustrée sur la figure. La came 10 vient agir sur la surface d'appui 9 de façon à pousser le doigt de blocage 7 à l'intérieur d'un creux 4. Dans le cas ou un tel creux ne se trouve pas en regard du bec 6 du doigt de blocage 7, la came 10 peut rester en position basse en comprimant le ressort 14. Dans ce cas, une légère rotation ultérieure de la roue 1 assure l'engagement du bec 6 dans le premier creux adjacent 4 verrouillant ainsi l'ensemble, la came 10 reprenant alors la position représentée sur la figure sous l'action du ressort de compression 14.

**Revendications**

1. Dispositif de blocage en position d'arrêt d'un organe mécanique rotatif (1) relié aux roues motrices d'un véhicule automobile, comportant une pluralité de créneaux périphériques (3, 4) coopérant avec un doigt de blocage pivotant (7) dont le dégagement est obtenu automatiquement sous l'action du couple de rotation engendré par le poids du véhicule et s'exerçant par l'intermédiaire des roues motrices sur l'organe mécanique rotatif (1), caractérisé par le fait que les surfaces de contact du doigt de blocage (6a, 6b) et d'un des créneaux (3a, 3b) respectivement pour l'un ou l'autre des sens de rotation de l'organe mécanique (1), sont inclinées de façon dissymétrique par rapport à une direction radiale de l'organe mécanique rotatif (1), l'inclinaison desdites surfaces de contact du doigt de blocage étant telle que les couples de basculement exercés par la rotation de l'organe mécanique et transmis par les créneaux (3, 4) au doigt de blocage (7) soient sensiblement identiques pour les deux sens de rotation de l'organe mécanique (1).

2. Dispositif de blocage selon la revendication 1, caractérisé par le fait que les inclinaisons des surfaces de contact sont telles que les bras de levier des efforts exercés par la rotation de l'organe mécanique (1) dans l'un et l'autre sens soient sensiblement dans le même rapport que les bras de levier des réactions par rapport au centre de rotation (8) du doigt de blocage (7).

3. Dispositif de blocage selon l'une quelconque des revendications précédentes, caractérisé par le fait que les surfaces en contact (3a, 6a ; 3b, 6b) des créneaux et/ou du doigt de blocage sont arrondies et présentent de préférence un profil en développante de cercle.

4. Dispositif de blocage selon l'une quelconque des revendications précédentes, caractérisé par le fait qu'il comprend en outre un mécanisme de commande du doigt de blocage comportant une came (10) pouvant se déplacer et agir sur le doigt de blocage (7) pour le rapprocher des créneaux de l'organe mécanique (1).

5. Dispositif de blocage selon la revendication 4, caractérisé par le fait qu'il comprend un ressort de rappel (11) du doigt de blocage (7) tendant à le dégager d'un créneau en l'absence de couple sur l'organe mécanique (1).

## Claims

1. A device for blocking in a stationary position a rotary mechanical component (1) connected to the drive wheels of an automotive vehicle, comprising a plurality of peripheral teeth or notches (3, 4) engaging with a pivoting locking finger (7) the release of which is achieved automatically by the action of the rotational torque set up by the weight of the vehicle and exerted through the drive wheels on the rotary mechanical component (1), characterized in that the contact surfaces of the locking finger (6a, 6b) and of one of the teeth (3a, 3b) respectively for either direction of rotation of the mechanical component (1), are inclined asymmetrically with respect to a radial direction of the rotary mechanical component (1), the said contact surfaces of the locking finger being so inclined that the tilting torques applied by rotation of the mechanical component and transmitted by the teeth or notches (3, 4) are roughly identical for both directions of rotation of the mechanical component (1).

2. The blocking device according to claim 1, characterized in that the contact surfaces are so inclined that the lever arms of the forces exerted by rotation of the mechanical component (1) in either direction are roughly in the same ratio as the lever arms of the reactions round the centre of rotation (8) of the locking arm (7).

3. The blocking device according to either of the previous claims, characterized in that the surfaces in contact (3a, 6a ; 3b, 6b) of the teeth and/or of the locking finger are rounded and preferably have the outline of the involute of a circle.

4. The blocking device according to any of the previous claims, characterized in that it also comprises a mechanism operating the locking finger which comprises a cam (10) capable of being moved and of acting on the locking finger (7) so as to bring it closer to the notches of the mechanical component.

5. The blocking device according to claim 4, characterized in that it comprises a return spring (11) tending to release the locking finger (7) from a notch when no torque is applied to the mechanical component (1).

## Ansprüche

1. Vorrichtung zum Feststellen eines mechanischen Drehelements (1) in Stillstandstellung, das mit den Antriebsrädern eines Motorfahrzeug verbunden ist, und das eine Anzahl auf seinem Umfang angeordneter Zacken (3, 4) trägt, die mit einem schwenkbar angeordneten Feststellfinger (7) zusammenwirken, der unter der Einwirkung des Drehmoments, das vom Gewicht des Fahrzeugs erzeugt wird und sich über die Antriebsräder auf das mechanische Drehelement (1) auswirkt, selbsttätig ausgerückt wird, dadurch gekennzeichnet, daß die Berührungsflächen (6a, 6b) des Feststellfingers (7) und der Zacken (3a, 3b) in der einen oder der anderen Drehrichtung des mechanischen Drehelements (1) in Radialrichtung des mechanischen Drehelements (1) asymmetrisch geschrägt sind, wobei die Schrägungen dieser Berührungsflächen des Feststellfingers (7) so sind, daß die von der Drehung des mechanischen Drehelements (1) erzeugten und durch die Zacken (3, 4) übertragenen Kippmonente im wesentlichen für die beiden Drehrichtungen des mechanischen Drehelements (1) identisch sind.

2. Feststellvorrichtung gemäß Anspruch 1, dadurch gekennzeichnet, daß die Schrägungen der Berührungsflächen so sind, daß die Hebelarme der durch die Drehung in der einen sowie in der anderen Richtung des mechanischen Drehelements (1) ausgeübten Kräfte im wesentlichen im gleichen Verhältnis stehen wie die Hebelarme der Reaktionskräfte im Verhältnis zum Drehpunkt (8) des Feststellfingers (7).

3. Feststellvorrichtung gemäß einem beliebigen der vorstehenden Ansprüche, dadurch gekennzeichnet, daß die Berührungsflächen (3a, 6a ; 3b, 6b) der Zacken und des Feststellfingers abgerundet sind und vorzugsweise ein Profil in der Form einer Kreisevolvente aufweisen.

4. Feststellvorrichtung gemäß einem beliebigen der vorstehenden Ansprüche, dadurch gekennzeichnet, daß sie ferner einen Steuermechanismus für den Feststellfinger umfaßt, der eine Nocke (10) enthält, die verschoben werden kann und auf den Feststellfinger (7) einwirkt, um ihn an die Zacken des mechanischen Drehelements (1) anzunähern.

5. Feststellvorrichtung gemäß Anspruch 4, dadurch gekennzeichnet, daß sie eine Rückholfeder (11) für den Feststellfinger (7) enthält, die in Richtung auf das Ausrücken desselben aus den Zacken wirkt, wenn das Drehmonent des mechanischen Drehelements (1) fehlt.